# EUROPEAN PATENT APPLICATION

(11) **EP 4 845 252 A1**
(43) Date of publication of application: **25.11.2026**
(21) Application number: 24917653.8
(22) Date of filing: 16.01.2024
(51) Int. Cl.: H04W 64/00

(54) **POSITIONING METHOD, TERMINAL DEVICE, TRIGGER DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN)
(74) Representative: Mewburn Ellis LLP
(86) International application number: PCT/CN2024/072513
(87) International publication number: WO 2025/152026

(57) **Abstract**

The present application relates to a positioning method, a terminal device, a trigger device, a network device, a chip, a computer-readable storage medium, a computer program product, a computer program, and a communication system. The positioning method comprises: a terminal device receives a first signal sent by a trigger device, the first signal comprising first identifier information, and the first identifier information being related to a reception area of the first signal; and the terminal device sends a second signal to a network device, the second signal comprising the first identifier information, and the first identifier information being used by the network device to determine the position of the terminal device. According to embodiments of the present application, the accuracy of positioning performed for the terminal device can be improved.

## Description

### TECHNICAL FIELD

The present application relates to the field of communications, and in particular, to a positioning method, a terminal device, a trigger device, a network device, a chip, a computer-readable storage medium, a computer program product, a computer program and a communication system.

### BACKGROUND

In wireless communication systems, the positioning of a terminal device may be achieved based on the communication time difference between a network device and the terminal device. For zero-power terminals that communicate using back scattering technology, distance estimation and positioning may also be performed by the detection of reflected energy. With the rapid development of information technology, how to improve the accuracy of terminal positioning has become more and more important.

### SUMMARY

Embodiments of the present application provide a positioning method, a terminal device, a trigger device, a network device, a chip, a computer-readable storage medium, a computer program product, a computer program and a communication system, which can improve the accuracy of positioning of a terminal device.

The embodiments of the present application provide a positioning method, which includes:
receiving, by a terminal device, a first signal transmitted by a trigger device, where the first signal includes first identification information, and the first identification information is related to a reception area of the first signal; and
transmitting, by the terminal device, a second signal to a network device, where the second signal includes the first identification information, and the first identification information is used by the network device to determine a position of the terminal device.

The embodiments of the present application provide a positioning method, which includes:
transmitting, by a trigger device, a first signal to a terminal device, where the first signal is used for indicating first identification information, the first identification information is related to a reception area of the first signal, and the first identification information is used for determining a position of the terminal device.

The embodiments of the present application provide a positioning method, which includes:
receiving, by a network device, a second signal from a terminal device, where the second signal includes first identification information obtained by the terminal device based on a first signal received by the terminal device, and the first identification information is related to a reception area of the first signal; and
determining, by the network device, a position of the terminal device based on the first identification information.

The embodiments of the present application provide a terminal device, which includes:
a first communication unit, configured to receive a first signal transmitted by a trigger device and to transmit a second signal to a network device, where the first signal includes first identification information, the first identification information is related to a reception area of the first signal, the second signal includes the first identification information, and the first identification information is used by the network device to determine a position of the terminal device.

The embodiments of the present application provide a trigger device, which includes:
a second communication unit, configured to transmit a first signal to a terminal device, where the first signal is used for indicating first identification information, the first identification information is related to a reception area of the first signal, and the first identification information is used for determining a position of the terminal device.

The embodiments of the present application provide a network device, which includes:
a third communication unit, configured to receive a second signal from a terminal device, where the second signal includes first identification information obtained by the terminal device based on a first signal received by the terminal device, and the first identification information is related to a reception area of the first signal; and
a first processing unit, configured to determine a position of the terminal device based on the first identification information.

The embodiments of the present application provide a terminal device, which includes: a transceiver, a processor and a memory. The memory is configured to store a computer program, the transceiver is configured to communicate with other devices, and the processor is configured to invoke and execute the computer program stored in the memory, to cause the terminal device to perform the above positioning method.

The embodiments of the present application provide a trigger device, which includes: a transceiver, a processor and a memory. The memory is configured to store a computer program, the transceiver is configured to communicate with other devices, and the processor is configured to invoke and execute the computer program stored in the memory, to cause the trigger device to perform the above positioning method.

The embodiments of the present application provide a network device, which includes: a transceiver, a processor and a memory. The memory is configured to store a computer program, the transceiver is configured to communicate with other devices, and the processor is configured to invoke and execute the computer program stored in the memory, to cause the network device to perform the above positioning method.

The embodiments of the present application provide a chip, configured to implement the above positioning methods.

Specifically, the chip includes: a processor, configured to invoke a computer program from a memory and execute the computer program, to cause a device equipped with the chip to perform the above positioning methods.

The embodiments of the present application provide a computer-readable storage medium, configured to store a computer program which, when executed by a device, causes the device to perform the above positioning methods.

The embodiments of the present application provide a computer program product, which includes computer program instructions, where the computer program instructions cause a computer to perform the above positioning methods.

The embodiments of the present application provide a computer program which, when executed on a computer, causes the computer to perform the above positioning methods.

The embodiments of the present application provide a communication system, which includes a terminal device, a trigger device, and a network device for performing the above positioning methods.

In the embodiments of the present application, the terminal device receives the first signal, and the first signal includes the first identification information related to its reception area, so that the first identification information can be carried in the second signal transmitted by the terminal device to the network device, to enable the network device to utilize the first identification information to determine the position of the terminal device, thereby improving the accuracy of the positioning of the terminal device.

### BRIEF DESCRIPTION OF THE DRAWINGS

FIG. 1 is a schematic diagram of a communication system according to the embodiments of the present application.
FIG. 2 is a schematic diagram of a zero-power communication system taking an RFID system as an example.
FIG. 3 is a principle diagram of back scattering communication.
FIG. 4 is a principle diagram of power harvesting for a zero-power device.
FIG. 5 is a circuit principle diagram of resistance load modulation.
FIG. 6 is a schematic flowchart of a positioning method according to an embodiment of the present application.
FIG. 7 is a schematic diagram of an exemplary application scenario of a positioning method according to the embodiments of the present application.
FIG. 8 is a schematic diagram of an application example of a positioning method according to the embodiments of the present application.
FIG. 9 is a schematic diagram of another application example of a positioning method according to the embodiments of the present application.
FIG. 10 is a schematic diagram of an example of binary sequence modulation in the embodiments of the present application.
FIG. 11 is an interaction flowchart of another application example of a positioning method according to the embodiments of the present application.
FIG. 12 is a schematic flowchart of a positioning method according to another embodiment of the present application.
FIG. 13 is a schematic flowchart of a positioning method according to another embodiment of the present application.
FIG. 14 is a schematic block diagram of a terminal device according to an embodiment of the present application.
FIG. 15 is a schematic block diagram of a trigger device according to an embodiment of the present application.
FIG. 16 is a schematic block diagram of a network device according to an embodiment of the present application.
FIG. 17 is a schematic block diagram of a communication device according to the embodiments of the present application.
FIG. 18 is a schematic block diagram of a chip according to the embodiments of the present application.
FIG. 19 is a schematic block diagram of a communication system according to the embodiments of the present application.

### DETAILED DESCRIPTION

Technical solutions in the embodiments of the present application will be described below in conjunction with accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-Generation (5G) communication system, a 6th-Generation (6G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include fullfeatured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In embodiments of the present application, the network device may be a device used for communicating with a mobile device. The network device may be an access point (AP) in WLAN, an evolved base station (Evolutional NodeB, eNB or eNodeB) in LTE, a relay station or an access point, a vehicle-mounted device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell or the like. These small cells have characteristics of small coverage range and low transmit power, which are applicable for providing a data transmission service with a high rate.

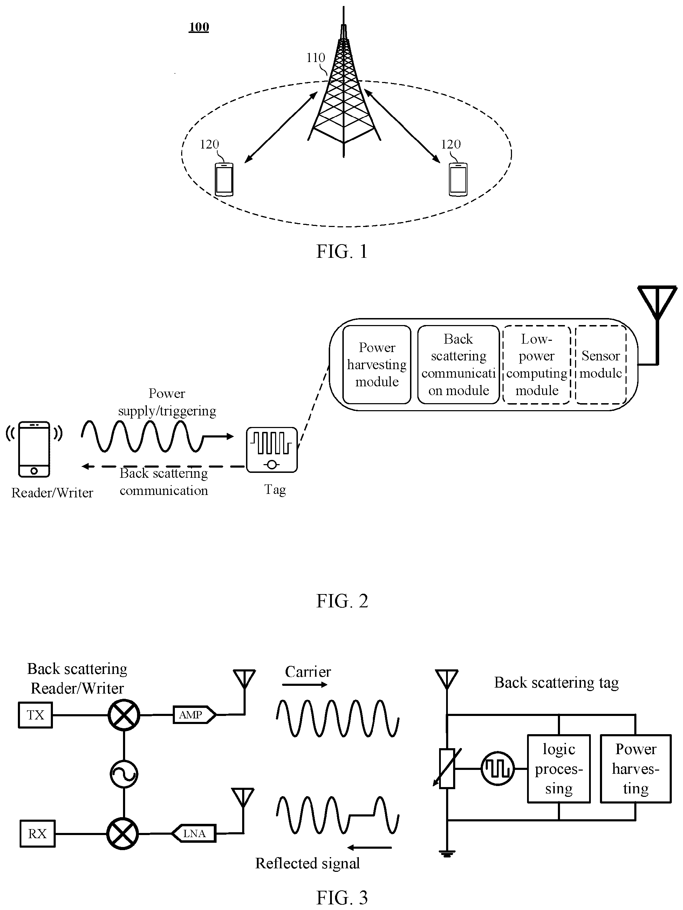

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

It should be understood that in the embodiments of the present application, a device having a communication function in a network/system may be referred to as a communication device. In an example of the communication system illustrated in FIG. 1, the communication device may include a network device and a terminal device, which have the communication function. The network device and the terminal device may be specific devices in the embodiments of the present application, and will not be detailed further here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that associated objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all falls within the protection scope of the embodiments of the present application.

### (I) Communication Based on Zero-Power Devices

In recent years, zero-power devices have become more widely used. A typical zero-power device is a device based on radio frequency identification (RFID), and the RFID is a technology that utilizes radio coupling between receiving and transmitting ends to implement contactless automatic transmission and identification of tag information, and the technology includes inductive coupling at short distances and electromagnetic coupling at long distances. An RFID tag is also referred to as "radio frequency tag" or "electronic tag". The types of electronic tags are categorized according to the difference in power supply modes, and the electronic tags may be categorized into active electronic tags, passive electronic tags and semi-passive electronic tags. An active electronic tag, also referred to as a voluntary electronic tag, means that power for working is provided by a built-in battery of the electronic tag. Different from an activation way of passive radio frequency, the tag may transmit messages at a set frequency band actively. A passive electronic tag, also referred to as an inactive electronic tag, does not support a built-in battery. When the passive electronic tag approaches a Reader/Writer, the electronic tag is within a near-field range formed by radiation of an antenna of the Reader/Writer, an antenna of the electronic tag generates an induced current through electromagnetic induction, and the induced current drives a chip circuit in the electronic tag. The chip circuit transmits identification information stored in the tag to the Reader/Writer through the antenna of the electronic tag. The semi-active electronic tag inherits advantages of the passive electronic tag, such as small size, light weight, low price and long service life. The built-in battery only provides power for a few circuits inside the chip when there is no Reader/Writer access. Only when the Reader/Writer accesses, the built-in battery supplies power to the RFID chip to increase reading and writing distances of the tags and improve reliability of communication.

As a wireless communication technology, the most basic RFID system includes two parts: an electronic tag (abbreviated as tag, TAG) and a Reader/Writer. The electronic tag is composed of a coupling component and a chip, and each electronic tag has a unique electronic coding, which is placed on a target to be measured to achieve a purpose of marking the target object. The Reader/Writer may not only read information on the electronic tag, but also write the information on the electronic tag, and also provide power required for communication for the electronic tag. FIG. 2 is a schematic diagram of a zero-power communication system taking an RFID system as an example. As illustrated in FIG. 2, after entering an electromagnetic field, the electronic tag receives a radio frequency signal (charging/triggering signal) transmitted by the Reader/Writer, the passive electronic tag or inactive electronic tag transmits information stored in the electronic tag by using power obtained by the electromagnetic field generated in space; and the Reader/Writer reads the information and decodes the information to identify the electronic tag.

RFID is a type of zero-power communication. Key technologies of such type of zero-power communication include power harvesting and back scattering communication as well as low-power computing. As illustrated in FIG. 2, a typical zero-power communication system includes a Reader/Writer and a zero-power device (e.g., TAG). The Reader/Writer emits radio waves for supplying power to the zero-power device. A power harvesting module installed in the zero-power device may harvest power carried by the radio waves in space (radio waves emitted by the Reader/Writer are illustrated in FIG. 2), to drive a low-power computing module of the zero-power device and realize back scattering communication. After obtaining the power, the zero-power device may receive control signaling from the Reader/Writer and transmit data to the Reader/Writer in a back scattering manner according to the control signaling. The transmitted data may come from data stored by the zero-power device itself (for example, an identification or pre-written information, such as a production date, a brand, or a manufacturer of a product). The zero-power device may also be loaded with various sensors, so as to report data harvested by various sensors based on the zero-power mechanism.

Communication based on zero-power devices, referred to as zero-power communication, includes the following key technologies.

### I. Back scattering Communication

FIG. 3 is a principle diagram of back scattering communication. As illustrated in FIG. 3, a zero-power device (the back scattering tag in FIG. 3) receives a carrier signal transmitted by a back scattering Reader/Writer and harvests power through an RF power harvesting module, and then supplies power to a low-power processing module (the logic processing module in FIG. 3), to modulate the incoming wave signal and performs back scattering.

The main features are as follows: (1) the terminal does not actively transmit a signal, but implements back scattering communication by modulating an incoming wave signal; (2) the terminal does not rely on a traditional active power amplifier transmitter and simultaneously uses a low-power computing unit, greatly reducing hardware complexity; and (3) combined with power harvesting, battery-free communication may be implemented.

### II. RF Power Harvesting

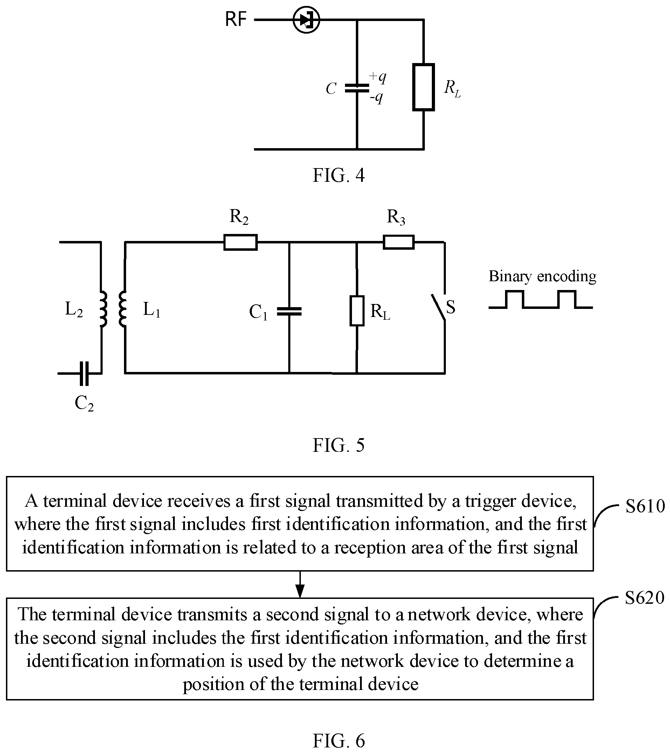

FIG. 4 is a principle diagram of power harvesting. As illustrated in FIG. 4, the RF module is used to implement power harvesting from spatial electromagnetic waves through electromagnetic induction, thereby driving the load circuit (low-power computing, sensors, etc.), which enables battery-free operation.

### III. Load Modulation

Load modulation is a method frequently used by zero-power devices to transmit data to a Reader/Writer. Load modulation adjusts circuit parameters of an oscillation loop of the zero-power device according to the rhythm of data stream, so that the magnitude and phase of the impedance of the zero-power device change accordingly, thereby completing the modulation process. Load modulation technology mainly includes two manners: resistive load modulation and capacitive load modulation.

FIG. 5 is a circuit principle diagram of resistive load modulation. As illustrated in FIG. 5, in resistive load modulation, resistor *R*₃ is connected in parallel with load *R_{L}*, referred to as the load modulation resistor, the resistor is switched on and off according to the clock of the data stream, and the switching of switch S is controlled by binary data coding. In capacitive load modulation, a capacitor is connected in parallel with the load, replacing the load modulation resistor controlled by binary data coding in FIG. 5.

### IV. Encoding

Data transmitted by a zero-power device may use different forms of codes to represent binary "1" and "0". A radio frequency identification system usually uses one of the following encoding manners: reverse non-return-to-zero (NRZ) encoding, Manchester encoding, unipolar return-to-zero encoding, differential bi-phase (DBP) encoding, Miller encoding, and differential encoding. In simple terms, different pulse signals are used to represent 0 and 1.

### (II) Cellular passive Internet of Things

As 5G industry applications increase, the types and application scenarios of connected things are growing, leading to higher requirements for the orice and power consumption of communication terminals. The application of battery-free and low-cost passive Internet of Things devices has become a key technology for cellular Internet of Things, enriching the types and quantity of connection terminals in 5G networks and truly realizing the Internet of Everything. Passive Internet of Things devices may be used in the cellular Internet of Things, based on existing zero-power devices.

### (III) Subcarrier Modulation

Subcarrier modulation means that a signal is modulated on a carrier firstly, and for some reasons, it is decided to perform modulation again, so this modulation result is used to modulate another carrier with a higher frequency. Subcarrier modulation is a modulation scheme often used in RFID systems.

### (IV) Classification of Zero-Power Devices

Based on the energy source and usage of zero-power devices, the zero-power devices may be classified into the following types.

### i) Passive Zero-Power Device

A passive zero-power device does not require a built-in battery. When the zero-power device approaches a network device (such as a Reader/Writer of an RFID system), the zero-power device is within a near-field range formed by antenna radiation of the network device. Therefore, an antenna of the zero-power device generates an induced current through electromagnetic induction, and the induced current drives a low-power chip circuit of the zero-power device, which realizes demodulation for a forward link signal (downlink, a link from the network device to the zero-power device) and modulation for a backward link signal (uplink, a link from the zero-power device to the network device). For a back scattering link, the zero-power device transmits signals by means of back scattering.

It can be seen that the passive zero-power device does not require a built-in battery to drive whether the forward link or the reverse link, and is a true zero-power terminal.

Since the passive zero-power device does not require batteries, a radio frequency circuit and a baseband circuit are very simple, for example, there is no need for devices such as a low noise amplifier (LNA), a power amplifier (PA), a crystal oscillator, or an analog-to-digital converter (ADC). Therefore, the passive zero-power device has many advantages such as small size, light weight, very cheap price and long service life.

### ii) Semi-Passive Zero-Power Device

A semi-passive zero-power device itself is also not equipped with a conventional battery therein, but may use an RF power harvesting module to harvest radio wave power or use a solar energy/light energy/thermal energy/kinetic energy harvesting module to harvest power, and store the harvested power in a power storage unit (such as a capacitor). After obtaining the power, the power storage unit may drive the low-power chip circuit of the zero-power device, which realizes demodulation for a forward link signal and modulation for a backward link signal. For a back scattering link, the zero-power device transmits signals by means of back scattering.

It can be seen that the semi-passive zero-power device does not require a built-in battery to drive either the forward link or the reverse link. Although the power stored in the capacitor is used during operation, the power comes from the radio power harvested by the power harvesting module. Therefore, it is also a true zero-power device.

The semi-passive zero-power device inherits many advantages of the passive zero-power device, and thus, it has many advantages such as small size, light weight, very cheap price and long service life.

### iii) Active Zero-Power Device

The zero-power device used in some scenarios may also be an active zero-power device, and such a terminal may have a built-in battery (conventional batteries, such as dry cells or rechargeable lithium-ion batteries). The battery is used to drive the low-power chip circuit of the zero-power device to realize demodulation for a forward link signal and modulation for a backward link signal. However, for a back scattering link, the zero-power device transmits signals by means of back scattering. Therefore, zero-power of this type of terminals is mainly reflected in the fact that the signal transmission of the reverse link does not require power of the terminal itself, but uses the manner of back scattering. Although the active zero-power device uses a battery, its power consumption is very low due to the use of ultra-low-power communication technology, which may significantly extend the working life of the battery compared to existing technologies.

The active zero-power device supplies power to the RFID chip through the built-in battery, which may increase reading and writing distances of the tags and improve the reliability of communication. Therefore, it is applied to scenarios that have relatively high requirements for communication distance, read latency and the like.

### (V) Application Scenarios for Zero-Power Devices

During the standardization discussion process, the zero-power Internet of Things may also be referred to as Ambient power enabled IoT (Ambient IoT). In some technical literature, it is also referred to as passive IoT. Ambient IoT may be applied for at least the following four types of scenarios:
object identification, such as logistics, management of products on production lines, and supply chain management;
environmental monitoring, such as monitoring of temperature, humidity and harmful gases in work environments and natural environments;
positioning, such as indoor positioning, smart item finding and positioning of items on production lines; and
smart control, such as smart control of various electrical appliances in smart home (turning air conditioners on/off or adjusting temperature), and smart control of various facilities in agricultural greenhouses (automatic irrigation or fertilization).

As described above, after a zero-power device obtains a downlink signal and power, the zero-power device may feed back information to the network at an uplink (UL) frequency via back scattering. Based on this, the network device obtains decoded information by decoding the reflected signal. The network device may distinguish and identify users through the decoded information. By measuring the reflected signal, the network device may also obtain the positioning of the terminal within a certain period of time, that is, distance estimation and positioning are performed through the detection of reflected energy. However, since the reflected energy does not accurately reflect the distance, the accuracy of the positioning of the zero-power device is not high.

FIG. 6 is a schematic flowchart of a positioning method according to an embodiment of the present application. Optionally, the method may be applied to the system illustrated in FIG. 1, but is not limited thereto. The method includes at least part of the following content.

In S610: a terminal device receives a first signal transmitted by a trigger device, where the first signal includes first identification information, and the first identification information is related to a reception area of the first signal.

In S620: the terminal device transmits a second signal to a network device, where the second signal includes the first identification information, and the first identification information is used by the network device to determine a position of the terminal device.

Optionally, the terminal device may include a zero-power device, and the problem of low positioning accuracy of the zero-power device is solved through the above method. The terminal device may also include other types of terminal devices, such as terminal devices with active transmission capability, and the use of the first identification information can help the network improve the positioning accuracy of the terminal device.

Optionally, the trigger device may include a network device; for example, the trigger device that transmits the first signal and the network device that receives the second signal are the same device. The trigger device may also include other devices other than the network device, for example, a power supply device used to supply power to the terminal device. In some scenarios, the trigger device may also be an access device of the terminal device.

In the embodiments of the present application, the first signal is used to carry the first identification information. Optionally, the first signal may further be used to supply power to the terminal device and/or to trigger an uplink transmission of the terminal device. Therefore, the first signal may be a power supply signal, a downlink trigger signal and so on. Exemplarily, in a case where the terminal device includes a zero-power device, the first signal may be used to supply power to the zero-power device.

In the embodiments of the present application, the reception area of the first signal is an area where the first signal can be received, or in other words, a coverage area of the first signal. Since the first identification information is related to the reception area of the first signal, different areas may be distinguished through the first identification information. Specifically, if the reception areas of two first signals are different, the first identification information included in the two first signals is also different.

Optionally, the first identification information may include an identifier (ID) of the reception area or an ID of other information related to the reception area. For example, the first identification information may include an ID of information used for adjusting the reception area. Specifically, if the reception area of the first signal is adjusted by adjusting a certain piece of information, the first identification information may include the ID of the information. As another example, different reception areas correspond to different resource information, that is, the first signal is transmitted based on different resources for different reception areas, then the first identification information may include an ID of the resource, where the resource information may include time information and/or frequency information, and so on.

In the embodiments of the present application, the second signal is an uplink signal transmitted by the terminal device to the network device. Optionally, the second signal may include an uplink signal dedicated to positioning, or may include an uplink signal for feeding back uplink information (such as traffic information or control information).

Since the second signal carries the first identification information, in a case of receiving the second signal, the network device may determine the reception area of the first signal received by the terminal device (i.e., the area where the terminal device is located) based on the first identification information. Therefore, the first identification information is used for determining the position of the terminal device, which may improve positioning precision, i.e., improve the accuracy of positioning, and the network device may utilize the first identification information to differentiate between terminal devices in different positions (or in other words, in different areas).

Optionally, the network device may determine the position of the terminal device based on the first identification information and measurement of the second signal.

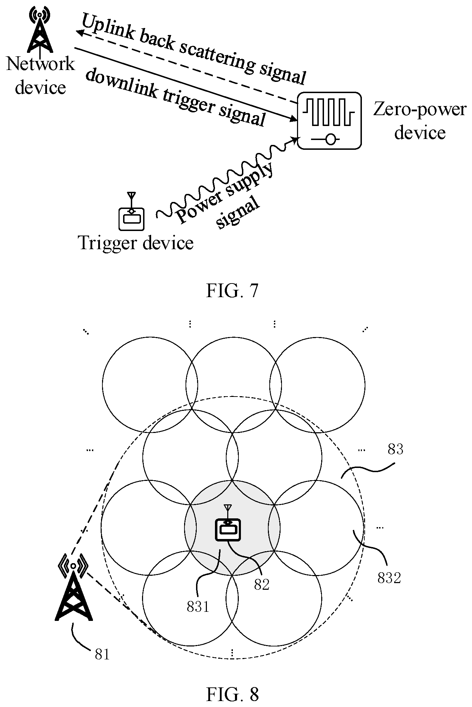

FIG. 7 is a schematic diagram of an exemplary application scenario of a positioning method according to the embodiments of the present application. As illustrated in FIG. 7, the communication system includes a network device, a trigger device and a zero-power device. The zero-power device receives the first signal transmitted by the trigger device, and the first signal is a power supply signal. The power supply signal includes the first identification information. After obtaining power based on the power supply signal, the zero-power device detects a downlink trigger signal transmitted by the network device and transmits the second signal to the network device, and the second signal is an uplink reflected signal. The uplink reflected signal also includes the first identification information, so that the network device may improve the accuracy of the positioning of the terminal device based on the first identification information.

In some embodiments, the first identification information is used to indicate at least one of the following (1) to (4).

### (I) Location information of the trigger device

Optionally, the trigger device may be used to transmit first signals including different first identification information in different areas. In other words, the trigger device may be used to transmit a first signal including specific first identification information in a specific area, where the specific first identification information corresponds to the specific area.

Specifically, the trigger device may be used to transmit first signals in multiple areas, respectively, and the first identification information in the first signals transmitted in different areas is different. Alternatively, trigger devices may be deployed at multiple positions (e.g., in multiple pre-divided areas). Due to the different positions, the first identification information in the first signals transmitted by each trigger device is different.

Since the position of the trigger device affects the reception area of the first signal, the first identification information including the location information of the trigger device may make the first identification information related to the reception area of the first signal. Thus, the network device determines the position of the terminal device based on the first identification information, and the positioning accuracy may be improved.

Exemplarily, the location information of the trigger device may include a sub-cell number or sub-cell ID within a cell associated with the network device. Optionally, the sub-cell may be a grid area within the cell.

FIG. 8 is a schematic diagram of an application example of a positioning method according to the embodiments of the present application. As illustrated in FIG. 8, a cell 83 associated with a network device 81 is divided into multiple grid areas, including a first grid area 831, a second grid area 832, and so on. The grid area may also be referred to as a power supply unit grid. The trigger device 82 energizes a zero-power device within the cell according to the grid areas using a power supply signal (the first signal). Specifically, when the trigger device 82 transmits the first signal in the first grid area 831, the signal carries a serial number of the first grid area 831, enabling the zero-power device within the first grid area 831 to receive the first signal. When the zero-power device transmits the second signal to the network device 81, the serial number of the first grid area 831 is carried, and the network device 81 may determine that the zero-power device is within the first grid area 831 based on the serial number of the first grid area 831, thereby improving the accuracy of positioning.

### (II) Beam information used by the trigger device for transmitting the first signal

Optionally, the beam information corresponds to a sub-cell (or in other words, an area, or a grid area) within a cell associated with the network device.

Optionally, the trigger device may transmit first signals including different first identification information to terminal devices in different areas based on a beamforming manner (or in other words, in an energy focusing manner). In other words, the trigger device transmits a first signal to a specific area based on a specific beam, and the first identification information in the first signal is used for indicating the specific beam.

Exemplarily, the beam information of the first signal may include a serial number of the beam used to transmit the first signal. Different beams have different directions, resulting in different reception areas.

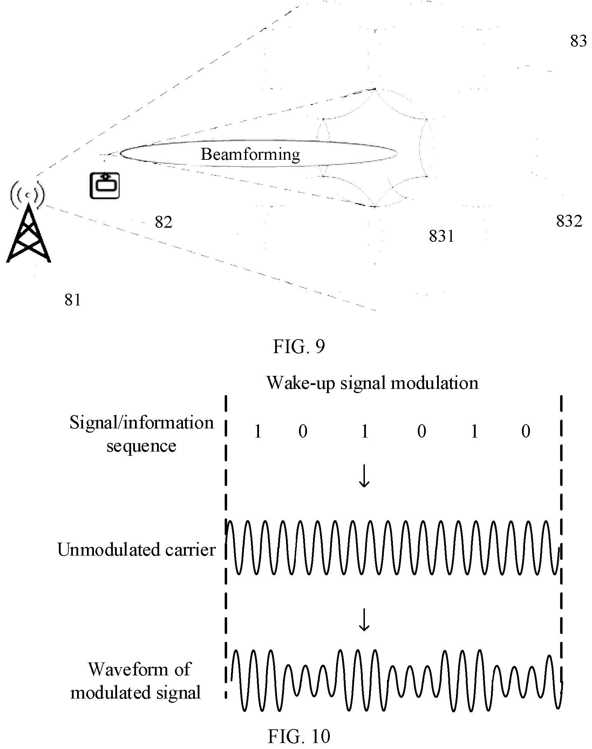

FIG. 9 is a schematic diagram of another application example of a positioning method according to the embodiments of the present application. As illustrated in FIG. 9, a cell 83 associated with a network device 81 is divided into multiple grid areas, including a first grid area 831, a second grid area 832, and so on. The grid area may also be referred to as a power supply unit grid. The trigger device 82 transmits power supply signals using a beamforming manner (energy focusing), focuses the power supply signals according to the grid areas to energize the zero-power device. When the trigger device 82 transmits the first signal to the first grid area 831 using a first beam, the first signal carries a serial number of the first beam, enabling the zero-power device within the first grid area 831 to receive the first signal. When the zero-power device transmits the second signal to the network device 81, the serial number of the first beam is carried, and the network device 81 may determine that the zero-power device is within the coverage area of the first beam according to the serial number of the first beam, i.e., within the first grid area 831, thereby improving the accuracy of positioning.

Optionally, in a case where a beamforming manner is used, the trigger device and the network device may be the same device.

### (III) Time information of the trigger device transmitting the first signal

Specifically, the time at which the first signal is transmitted differs for different areas. In other words, the time at which the first signal is transmitted is related to the reception area of the first signal. For example, the time at which the trigger device transmits the first signal in the first grid area is different from the time at which the first signal is transmitted in the second grid area. Alternatively, the time at which the trigger device transmits the first signal to the first grid area using the beamforming manner is different from the time at which the trigger device transmits the first signal to the second grid area using the beamforming manner. In this case, different grid areas may be distinguished using a time-division manner.

Sequentially activating terminal devices at different physical locations using a time-division manner may further achieve batch activation of terminal devices. In scenarios where a network accommodates a large number of terminal devices, such as logistics, warehousing or environmental monitoring, it is possible to achieve that activation times for the terminal devices in different grid areas are different, thereby preventing a massive number of terminal devices from simultaneously using or receiving wireless communication resources, and avoiding congestion. The network device can also implement differentiation of terminal devices in different areas based on the first identification information.

Optionally, the time information of the trigger device transmitting the first signal includes information of a time slice in which the first signal is located.

Exemplarily, the time slice may include a slot or a frame, and correspondingly, the information of the time slice may include a serial number of a slot or a frame number, etc.

### (IV) Information of a cell to which the trigger device belongs

Specifically, the network device is associated with multiple cells. The trigger device may be deployed in a grid area within a specific cell, or the trigger device may be used to transmit the first signal to each grid area within the specific cell in a beamforming manner. The specific cell is the cell to which the trigger device belongs. Correspondingly, the information of the cell to which the trigger device belongs may include an ID of the cell to which the trigger device belongs.

It may be understood that in a case where the network device is associated with multiple cells, the first identification information being used for indicating the information of the cell to which the trigger device belongs may cause the network device to accurately determine in the grid area of which cell the terminal device is specifically located, thereby helping the network device to accurately position the terminal.

In the embodiments of the present application, the first identification information may indicate one item of information (1) to (4) above, or indicate multiple items of information (1) to (4) above.

In an example, the first identification information may be used for indicating one of: the location information of the trigger device, the beam information, or the time information of the trigger device transmitting the first signal. Optionally, the first identification information may further be used for indicating the information of the cell to which the trigger device belongs.

In another example, the first identification information may indicate the location information of the trigger device or the beam information, and simultaneously, the first identification information indicates the time information of the trigger device transmitting the first signal, to further improve the accuracy of the positioning of the terminal by combining the position of the trigger device/the beam information with a time-division manner.

It should be noted that in practical applications, the information content indicated by the first identification information may also be configured according to scenario requirements, system conventions or network configurations, which is not limited to the examples provided above.

In some embodiments, the first signal and/or the second signal are obtained through binary sequence modulation based on the first identification information. Specifically, the terminal device may obtain the second signal through binary sequence modulation based on the first identification information, or the trigger device may obtain the first signal through binary sequence modulation based on the first identification information.

Exemplarily, a sequence used in the above binary sequence modulation may include a PN sequence, a Gold sequence, an M-sequence, a Hadamard sequence or other sequences.

Exemplarily, a modulation scheme used in the above binary sequence modulation may include amplitude modulation, frequency modulation or phase modulation.

FIG. 10 is a schematic diagram of an example of binary sequence modulation in the embodiments of the present application. As illustrated in FIG. 10, a signal/information sequence, e.g., 101010, is determined based on information that needs to be indicated (e.g., the position of the trigger device and the ID of the cell to which the trigger belongs). The signal/information sequence is then loaded onto an unmodulated carrier (a carrier that is not modulated with the signal/information sequence), to obtain a waveform of the modulated signal.

In some embodiments, the terminal device transmitting the second signal to the network device includes: transmitting, by the terminal device, the second signal to the network device in a case where the received first signal satisfies a first condition.

That is, the terminal device transmits the second signal to the network device only when the first signal satisfies a certain condition. In a case where the terminal device includes the zero-power device and the first signal is used to supply power to the zero-power device, in the present embodiment, the correct transmission of the second signal may be ensured.

In some embodiments, the first condition includes:
energy accumulated based on the first signal reaching a first threshold; and/or
strength of the first signal being greater than or equal to a second threshold.

Optionally, the first threshold may be configured by the network device or preconfigured. Exemplarily, the first threshold may be 0.1Joule (J), 0.01J, 0.001J, 0.0001J, or the like.

Optionally, the second threshold may be a power threshold, that is, the first condition is satisfied when the power strength of the first signal is greater than or equal to the second threshold. Exemplarily, the second threshold may be -20decibel-milliwatts (dBm), -40dBm, - 60dBm, -80dBm, or the like.

According to the above embodiments, the terminal device transmits the second signal when the energy accumulated based on the first signal reaches the first threshold and/or the strength of the first signal is greater than or equal to the second threshold. In this way, it can be ensured that there is sufficient energy for transmitting the second signal, and the energy of the second signal is increased. In a case where the network device determines the position of the terminal device by performing energy detection on the second signal and combined with the first identification information, in the present embodiment, the accuracy of energy detection is improved, thereby improving positioning accuracy.

In some embodiments, the terminal device does not transmit the second signal when the terminal device does not receive a first signal that satisfies the first condition. Optionally, the terminal device may continue to receive the first signal, to cause the accumulated energy to reach the first threshold and/or enable reception of a first signal with the strength greater than or equal to the second threshold.

Optionally, when the terminal device does not receive the first signal that satisfies the first condition, the terminal device may remain in a power-saving reception state and continue to detect the first signal.

Optionally, the terminal device may periodically receive the first signal and transmit the second signal. Specifically, the terminal device completes uplink feedback to the network device within one period, that is, accesses the network device once within one period. If the first signal that satisfies the first condition is not received within one period, the terminal device stops transmitting the second signal (i.e., stops the uplink signal feedback) within the period.

In some embodiments, transmitting, by the terminal device, the second signal to the network device in the case where the received first signal satisfies the first condition includes: in the case where the received first signal satisfies the first condition, detecting, by the terminal device, a third signal transmitted by the network device, and transmitting the second signal based on the third signal.

Exemplarily, the third signal transmitted by the network device may be a downlink trigger signal, used to trigger the terminal device to transmit the second signal, for example, to trigger the terminal device to report information.

Optionally, the terminal device may, based on the triggering or indication of the third signal, determine information to be carried by the second signal, and then transmit the second signal.

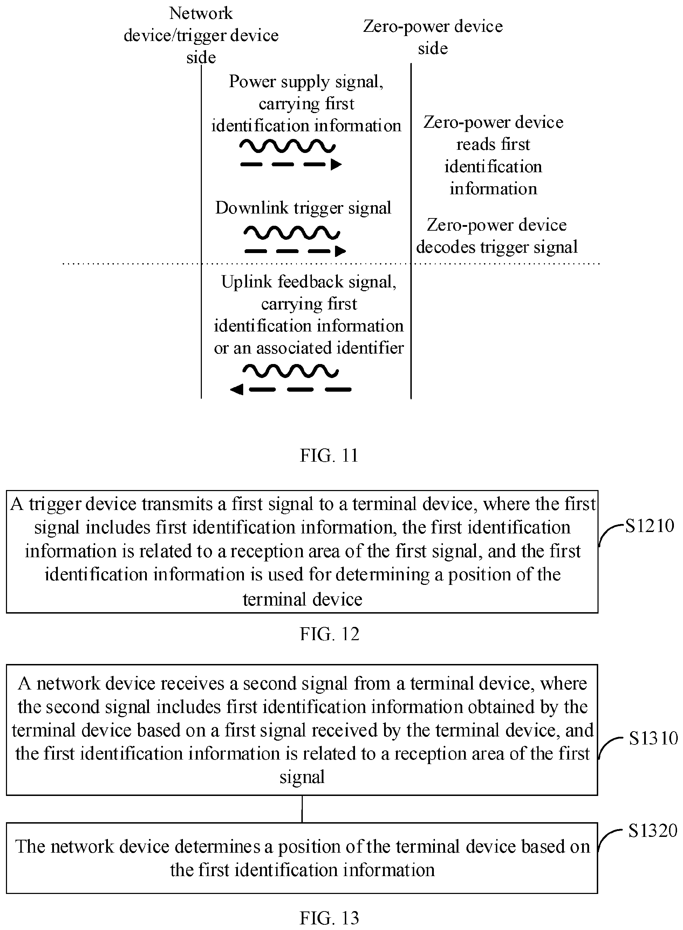

Optionally, the terminal device may perform reflection based on the third signal to transmit the second signal. That is, the second signal is transmitted by reflection based on the third signal. Here, the reflection transmission refers to transmission using back scattering technology. FIG. 11 is an interaction flowchart of another application example of a positioning method according to the embodiments of the present application. As illustrated in FIG. 11, the zero-power device firstly receives the power supply signal (the first signal) from the trigger device, where the power supply signal carries the first identification information; and the zero-power device reads the first identification information. Subsequently, the zero-power device detects the downlink trigger signal (the third signal), decodes the downlink trigger signal, and transmits the uplink feedback signal (the second signal) by reflection based on the downlink trigger signal. At the network device/trigger device end illustrated in FIG. 11, the network device and the trigger device may be the same device or different devices.

Optionally, the terminal device may detect the third signal and transmit the second signal in a specified slot after the received first signal satisfies the first condition, so that the terminal devices in different areas perform network registration/access orderly. The specified slot may be a slot determined based on a preset time interval.

Optionally, the second signal may also be transmitted by reflection based on the first signal. For example, in a case where the trigger device and the network device are the same device, after receiving the first signal, the terminal device may transmit the second signal by reflection based on the first signal without needing to detect the third signal. Optionally, the second signal may be transmitted in a specified slot after the first signal. In this example, the first signal may further be used for both power supply and downlink triggering, that is, the power supply signal and the downlink trigger signal may be the same signal.

As described above, the terminal device may receive the first signal and transmit the second signal within one period, to complete the uplink feedback. Exemplarily, the terminal device may receive the first signal and complete network access/registration once based on the activation of the first signal within one period, that is, one round of downlink detection and uplink feedback is completed. After completing this round of network access/registration, the terminal device no longer performs downlink detection or uplink feedback within the current period until the next period. If each terminal device within the cell associated with the network device performs network access/registration according to the periodic access method, transmission conflicts among a large number of terminal devices may be avoided, thereby facilitating achieving orderly access of a large number of devices.

Optionally, the terminal device may determine an associated period through a timer, and receive the first signal and transmit the second signal during the period.

Optionally, the terminal device may further determine a period by detecting a period boundary signal. The period boundary signal may be transmitted by the network device, or may be transmitted by the trigger device.

Specifically, in some embodiments, the positioning method further includes: receiving, by the terminal device, a period boundary signal, where the period boundary signal is used by the terminal device to determine whether to process the first signal.

Exemplarily, the period boundary signal may be used to represent a start and/or an end of a period. Based on this, the terminal device may determine a period based on the period boundary signal to determine a current phase within the period at different time points, thereby determining whether to process the first signal. For example, the period boundary signal is used to represent the start of a period, and the terminal device starts to detect the first signal after receiving the period boundary signal, and in the case where the first signal satisfies the condition, detects the third signal and transmits the second signal by reflection based on the third signal. Subsequently, the terminal device stops processing the first signal, that is, neither receives the first signal nor performs downlink trigger signal detection and uplink feedback, until the terminal device receives the period boundary signal again; and the terminal device enters the next period, and then processes the first signal. In addition, if the terminal device does not detect the first signal that satisfies the condition within one period, the terminal device stops downlink trigger signal detection and uplink feedback within the period.

In some embodiments, the period boundary signal includes timing information, and the timing information is used by the terminal device to determine a period for processing the first signal.

Optionally, the timing information may include a period size. For example, the period boundary signal indicates the start of a period, including the period size, and the terminal device may determine the end time of the period based on the start time of the period and the period size, where the end time may also be the start of the next period, thus eliminating the need to determine each period by receiving period boundary signals multiple times.

Corresponding to the above methods, the present application further provides a positioning method performed by a trigger device and a network device.

FIG. 12 is a schematic flowchart of a positioning method according to another embodiment of the present application. The method includes the following.

In S1210: a trigger device transmits a first signal to a terminal device, where the first signal includes first identification information, the first identification information is related to a reception area of the first signal, and the first identification information is used for determining a position of the terminal device.

According to the above embodiments, the trigger device carries the first identification information related to the reception area of the first signal by transmitting the first signal, to cause the terminal device to obtain the first identification information, and the terminal device may cause the receiving end to determine the position of the terminal device by transmitting the first identification information.

In some embodiments, the first identification information is used by a network device to determine the position of the terminal device. Specifically, the terminal device transmits a second signal including the first identification information to the network device. The network device and the trigger device may be the same device or different devices.

In some embodiments, the trigger device is used to transmit first signals including different first identification information in different areas.

In some embodiments, the trigger device transmitting the first signal to the terminal device includes:
transmitting, by the trigger device, first signals including different first identification information to terminal devices in different areas based on a beamforming manner.

In some embodiments, the first identification information is used for indicating at least one of:
location information of the trigger device;
beam information transmitted by the trigger device for transmitting the first signal;
time information of the trigger device transmitting the first signal; or
information of a cell to which the trigger device belongs.

In some embodiments, the time information includes information of a time slice in which the first signal is located.

In some embodiments, the terminal device includes a zero-power device, and the first signal is further used to supply power to the zero-power device.

In some embodiments, the positioning method further includes: transmitting, by the trigger device, a period boundary signal to the terminal device, where the period boundary signal is used by the terminal device to determine whether to process the first signal.

In some embodiments, the period boundary signal includes timing information, and the timing information is used by the terminal device to determine a period for processing the first signal.

In some embodiments, the first signal is obtained through binary sequence modulation based on the first identification information.

In some embodiments, the first signal is used to trigger the terminal device to transmit a second signal to a network device, the second signal includes the first identification information, and the first identification information is used by the network device to determine a position of the terminal device.

In some embodiments, the trigger device communicates with the network device through a dedicated link.

As described above, the network device and the trigger device may be the same device, or may be different devices. In a case where the network device and the trigger device are different devices, the trigger device communicates with the network device through the dedicated link, so that the network device can obtain a correspondence between the location information of the trigger device/beam information/time information and the reception area of the first signal. In a case where the network device and the trigger device are the same device, the device may further receive the second signal and determine the position of the terminal device according to the first identification information in the second signal.

For specific examples of the method performed by the trigger device in the embodiments of the present application, reference may be made to the descriptions related to the trigger device in the above method performed by the terminal device. In a case where the trigger device and the network device are the same device, for specific examples performed by the trigger device, reference may also be made to the descriptions related to the network device in the method performed by the terminal device, which will not be repeated here for the sake of brevity.

FIG. 13 is a schematic flowchart of a positioning method according to another embodiment of the present application. The method includes the following.

In S1310: a network device receives a second signal from a terminal device, where the second signal includes first identification information obtained by the terminal device based on a first signal received by the terminal device, and the first identification information is related to a reception area of the first signal.

S1320: the network device determines a position of the terminal device based on the first identification information.

In some embodiments, the first identification information is used for indicating at least one of: location information of a trigger device that transmits the first signal; beam information transmitted by the trigger device for transmitting the first signal; time information of the trigger device transmitting the first signal; or information of a cell to which the trigger device belongs.

In some embodiments, the time information includes information of a time slice in which the first signal is located.

In some embodiments, the terminal device includes a zero-power device, and the first signal is a power supply signal for the zero-power device.

In some embodiments, the positioning method further includes: transmitting, by the network device, a third signal to the terminal device, where the third signal is used to trigger the terminal device to transmit the second signal.

In some embodiments, the second signal is transmitted by reflection based on the third signal.

In some embodiments, the second signal is transmitted by reflection based on the first signal.

In some embodiments, the positioning method further includes: transmitting, by the network device, a period boundary signal to the terminal device, where the period boundary signal is used by the terminal device to determine whether to process the first signal.

In some embodiments, the period boundary signal includes timing information, and the timing information is used by the terminal device to determine a period for processing the first signal.

In some embodiments, the first signal and/or the second signal are obtained through binary sequence modulation based on the first identification information.

In some embodiments, the first signal is transmitted by a trigger device, and the trigger device communicates with the network device through a dedicated link.

For specific examples of the method performed by the network device in the embodiments of the present application, reference may be made to the descriptions related to the network device in the above method performed by the terminal device and the above method performed by the trigger device. In a case where the trigger device and the network device are the same device, for specific examples of the method performed by the network device, reference may also be made to the descriptions related to the trigger device in the method performed by the terminal device and the method performed by the trigger device, which will not be repeated here for the sake of brevity.

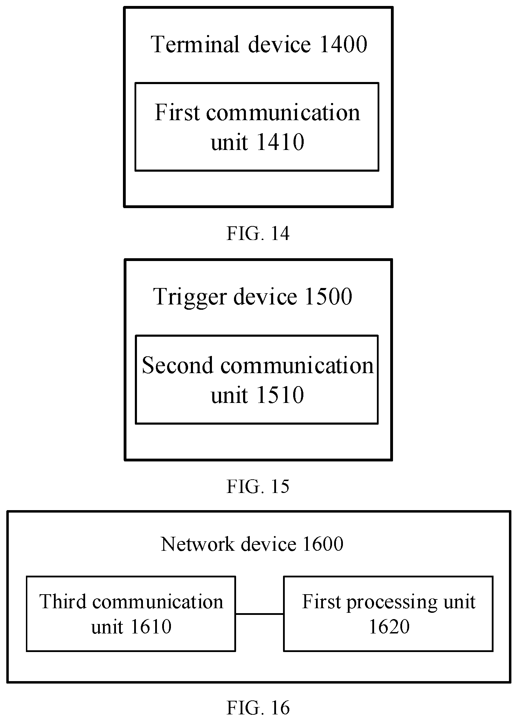

FIG. 14 is a schematic block diagram of a terminal device 1400 according to an embodiment of the present application. The terminal device 1400 may include:
a first communication unit 1410, configured to receive a first signal transmitted by a trigger device and to transmit a second signal to a network device; where the first signal includes first identification information, the first identification information is related to a reception area of the first signal, the second signal includes the first identification information, and the first identification information is used by the network device to determine a position of the terminal device.

In some embodiments, the first identification information is used for indicating at least one of: location information of the trigger device; beam information transmitted by the trigger device for transmitting the first signal; time information of the trigger device transmitting the first signal; or information of a cell to which the trigger device belongs.

In some embodiments, the time information includes information of a time slice in which the first signal is located.

In some embodiments, the terminal device includes a zero-power device, and the first signal is further used to supply power to the zero-power device.

In some embodiments, the first communication unit 1410 is configured to:
transmit the second signal to the network device in a case where the received first signal satisfies a first condition.

In some embodiments, the first condition includes: energy accumulated based on the first signal reaching a first threshold; and/or strength of the first signal being greater than or equal to a second threshold.

In some embodiments, the first communication unit 1410 is configured to, in the case where the received first signal satisfies the first condition, detect a third signal transmitted by the network device and transmit the second signal based on the third signal.

In some embodiments, the second signal is transmitted by reflection based on the third signal.

In some embodiments, the second signal is transmitted by reflection based on the first signal.

In some embodiments, the first communication unit 1410 is further configured to receive a periodic boundary signal, where the periodic boundary signal is used by the terminal device to determine whether to process the first signal.

In some embodiments, the periodic boundary signal includes timing information, and the timing information is used by the terminal device to determine a period for processing the first signal.

In some embodiments, the first signal and/or the second signal are obtained through binary sequence modulation based on the first identification information.

The terminal device 1400 in the embodiments of the present application is capable of implementing the corresponding functions of the terminal device in the above method embodiments. The processes, functions, implementation methods and beneficial effects corresponding to various modules (sub-modules, units, components, and so on) in the terminal device 1400 may refer to the corresponding descriptions of the above method embodiments, and will not be not repeated here. It should be noted that the functions described with respect to the various modules (sub-modules, units, components, and so on) in the terminal device 1400 in the embodiments of the present application may be implemented by different modules (sub-modules, units, components, and so on) or by the same module (sub-module, unit, component, and so on).

FIG. 15 is a schematic block diagram of a trigger device 1500 according to an embodiment of the present application. The trigger device 1500 may include:
a second communication unit 1510, configured to transmit a first signal to a terminal device, where the first signal is used for indicating first identification information, the first identification information is related to a reception area of the first signal, and the first identification information is used for determining a position of the terminal device.

In some embodiments, the trigger device is used to transmit first signals including different first identification information in different areas.

In some embodiments, the second communication unit 1510 is configured to transmit first signals including different first identification information to terminal devices in different areas based on a beamforming manner.

In some embodiments, the first identification information is used for indicating at least one of: location information of the trigger device; beam information transmitted by the trigger device for transmitting the first signal; time information of the trigger device transmitting the first signal; cell information of a cell to which the trigger device belongs.

In some embodiments, the time information includes information of a time slice in which the first signal is located.

In some embodiments, the terminal device includes a zero-power device, and the first signal is further used to supply power to the zero-power device.

In some embodiments, the second communication unit 1510 is further configured to transmit a periodic boundary signal to the terminal device, where the periodic boundary signal is used by the terminal device to determine whether to process the first signal.

In some embodiments, the periodic boundary signal includes timing information, and the timing information is used by the terminal device to determine a period for processing the first signal.

In some embodiments, the first signal is obtained through binary sequence modulation based on the first identification information.

In some embodiments, the first signal is used to trigger the terminal device to transmit a second signal to a network device, the second signal includes the first identification information, and the first identification information is used by the network device to determine a position of the terminal device.

In some embodiments, the trigger device communicates with the network device through a dedicated link.

The trigger device 1500 in the embodiments of the present application is capable of implementing the corresponding functions of the trigger device in the above method embodiments. The processes, functions, implementation methods and beneficial effects corresponding to various modules (sub-modules, units, components, and so on) in the trigger device 1500 may refer to the corresponding descriptions of the above method embodiments, and will not be not repeated here. It should be noted that the functions described with respect to the various modules (sub-modules, units, components, and so on) in the trigger device 1500 in the embodiments of the present application may be implemented by different modules (sub-modules, units, components, and so on) or by the same module (sub-module, unit, component, and so on).

FIG. 16 is a schematic block diagram of a network device 1600 according to an embodiment of the present application. The network device 1600 may include:
a third communication unit 1610configured to configured to receive a second signal from a terminal device, where the second signal includes first identification information obtained by the terminal device based on a first signal received by the terminal device, and the first identification information is related to a reception area of the first signal; and
a first processing unit 1620, configured to determine a position of the terminal device based on the first identification information.

In some embodiments, the first identification information is used for indicating at least one of: location information of a trigger device that transmits the first signal; beam information transmitted by a trigger device for transmitting the first signal; time information of a trigger device transmitting the first signal; or information of a cell to which a trigger device belongs.

In some embodiments, the time information includes information of a time slice in which the first signal is located.

In some embodiments, the terminal device includes a zero-power device, and the first signal is a power supply signal for the zero-power device.

In some embodiments, the third communication unit 1610 is further configured to transmit a third signal to the terminal device, where the third signal is used to trigger the terminal device to transmit the second signal.

In some embodiments, the second signal is transmitted by reflection based on the third signal.

In some embodiments, the second signal is transmitted by reflection based on the first signal.

In some embodiments, the third communication unit 1610 is further configured to transmit a periodic boundary signal to the terminal device, where the periodic boundary signal is used by the terminal device to determine whether to process the first signal.

In some embodiments, the periodic boundary signal includes timing information, and the timing information is used by the terminal device to determine a period for processing the first signal.

In some embodiments, the first signal and/or the second signal are obtained through binary sequence modulation based on the first identification information.

In some embodiments, the first signal is transmitted by a trigger device, and the trigger device communicates with the network device through a dedicated link.

The network device 1600 in the embodiments of the present application is capable of implementing the corresponding functions of the network device in the above method embodiments. The processes, functions, implementation methods and beneficial effects corresponding to various modules (sub-modules, units, components, and so on) in the network device 1600 may refer to the corresponding descriptions of the above method embodiments, and will not be not repeated here. It should be noted that the functions described with respect to the various modules (sub-modules, units, components, and so on) in the network device 1600 in the embodiments of the present application may be implemented by different modules (sub-modules, units, components, and so on) or by the same module (sub-module, unit, component, and so on).

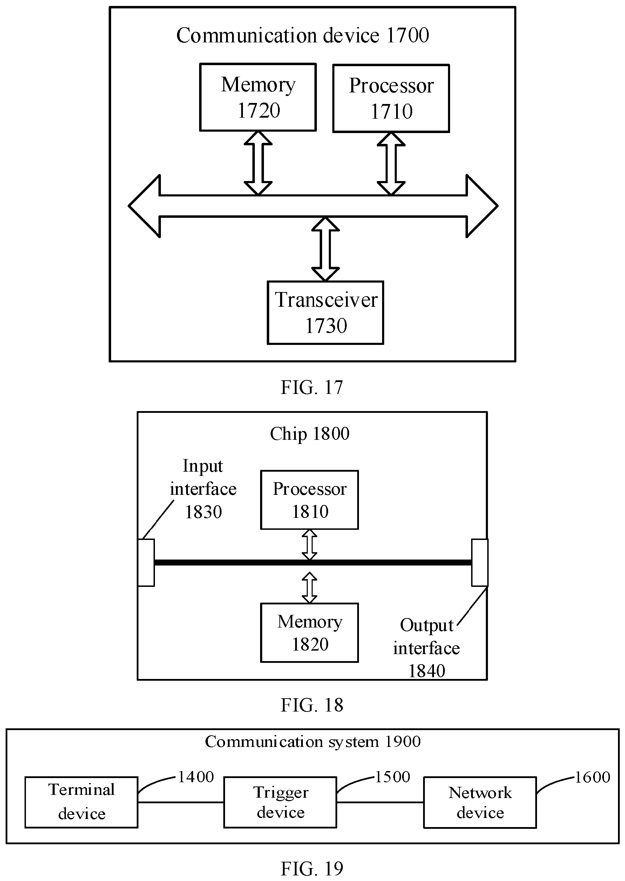

FIG. 17 is a schematic structural diagram of a communication device 1700 according to the embodiments of the present application. The communication device 1700 includes a processor 1710, and the processor 1710 may invoke a computer program from a memory and execute the computer program, to enable the communication device 1700 to implement the methods in the embodiments of the present application.

In an implementation, the communication device 1700 may further include a memory 1720. The processor 1710 may invoke a computer program from the memory 1720 and execute the computer program, to enable the communication device 1700 to implement the methods in the embodiments of the present application.

The memory 1720 may be a separate device independent of the processor 1710, or may be integrated into the processor 1710.

In an implementation, the communication device 1700 may further include a transceiver 1730. The processor 1710 may control the transceiver 1730 to communicate with other devices, and specifically, to transmit information or data to other devices, or receive information or data transmitted by other devices.

The transceiver 1730 may include a transmitter and a receiver. The transceiver 1730 may further include antenna(s), and the number of antenna(s) may be one or more.

In an implementation, the communication device 1700 may be the network device in the embodiments of the present application, and the communication device 1700 may implement the corresponding procedures implemented by the network device in the various methods in the embodiments of the present application, which will not be repeated here for the sake of brevity.

In an implementation, the communication device 1700 may be the terminal device in the embodiments of the present application, and the communication device 1700 may implement the corresponding procedures implemented by the terminal device in the various methods in the embodiments of the present application, which will not be repeated here for the sake of brevity.

In an implementation, the communication device 1700 may be the trigger device in the embodiments of the present application, and the communication device 1700 may implement the corresponding processes performed by the trigger device in the various methods of the embodiments of the present application, which will not be repeated here for the sake of brevity.

FIG. 18 is a schematic structural diagram of a chip 1800 according to the embodiments of the present application. The chip 1800 includes a processor 1810, and the processor 1810 may invoke a computer program from a memory and execute the computer program, to implement the methods in the embodiments of the present application.

In an implementation, the chip 1800 may further include a memory 1820. The processor 1810 may invoke a computer program from the memory 1820 and execute the computer program, to implement the methods performed by the terminal device or the network device in the embodiments of the present application.

The memory 1820 may be a separate device independent of the processor 1810, or may be integrated into the processor 1810.

In an implementation, the chip 1800 may further include an input interface 1830. The processor 1810 may control the input interface 1830 to communicate with other devices or chips, and specifically, may obtain information or data transmitted by other devices or chips.

In an implementation, the chip 1800 may further include an output interface 1840. The processor 1810 may control the output interface 1840 to communicate with other devices or chips, and specifically, may output information or data to other devices or chips.

In an implementation, the chip may be applied to the network device in the embodiments of the present application, and the chip may implement the corresponding procedures implemented by the network device in the various methods in the embodiments of the present application, which will not be repeated here for the sake of brevity.

In an implementation, the chip may be applied to the terminal device in the embodiments of the present application, and the chip may implement the corresponding procedures implemented by the terminal device in the various methods in the embodiments of the present application, which will not be repeated here for the sake of brevity.

In an implementation, the chip may be applied to the trigger device in the embodiments of the present application, and the chip may implement the corresponding procedures implemented by the trigger device in the various methods in the embodiments of the present application, which will not be repeated here for the sake of brevity.

The chips applied to the network device, the terminal device and the trigger device may be the same chip or different chips.

It should be understood that the chip mentioned in the embodiments of the present application may also be referred to as a system-level chip, a system chip, a chip system, a system-on-a-chip, or the like.

The above processor may be a general-purpose processor, a digital signal processor (DSP), a field programmable gate array (FPGA), an application specific integrated circuit (ASIC), or other programmable logic devices, transistor logic devices, discrete hardware components, or the like. The above general-purpose processor may be a microprocessor, or may also be any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limiting illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and so on. That is, the memory in the embodiments of the present application is intended to include, but is not limited to, these and any other suitable types of memories.

FIG. 19 is a schematic block diagram of a communication system 1900 according to the embodiments of the present application. The communication system 1900 includes a terminal device 1400, a trigger device 1500 and a network device 1600.

The terminal device 1400 may be configured to implement the corresponding functions implemented by the terminal device in the above methods, the trigger device 1500 may be configured to implement the corresponding functions implemented by the trigger device in the above methods, and the network device 1600 may be configured to implement the corresponding functions implemented by the network device in the above methods, which will not be repeated here for the sake of brevity.

The above embodiments may be implemented in whole or in part through software, hardware, firmware or any combination thereof. When implemented by using software, the embodiments may be implemented in a form of a computer program product in whole or in part. The computer program product includes one or more computer instructions. When the computer program instructions are loaded on and executed by a computer, processes or functions according to the embodiments of the present application are generated in whole or in part. The computer may be a general-purpose computer, a dedicated computer, a computer network or any other programmable apparatuses. The computer instructions may be stored in a computer-readable storage medium or transmitted from one computer-readable storage medium to another computer-readable storage medium. For example, the computer instructions may be transmitted from a website, a computer, a server or a data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a digital video disc (DVD)), a semiconductor medium (e.g., a solid state disk (SSD)), or the like.

It should be understood that, in the various embodiments of the present application, the magnitude of the serial number of each of the above processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A positioning method, comprising:
receiving, by a terminal device, a first signal transmitted by a trigger device, wherein the first signal comprises first identification information, and the first identification information is related to a reception area of the first signal; and
transmitting, by the terminal device, a second signal to a network device, wherein the second signal comprises the first identification information, and the first identification information is used by the network device to determine a position of the terminal device.

2. The method according to claim 1, wherein the first identification information is used for indicating at least one of:
location information of the trigger device;
beam information transmitted by the trigger device for transmitting the first signal;
time information of the trigger device transmitting the first signal; or
information of a cell to which the trigger device belongs.

3. The method according to claim 2, wherein the time information comprises information of a time slice in which the first signal is located.

4. The method according to any one of claims 1 to 3, wherein the terminal device comprises a zero-power device, and the first signal is further used to supply power to the zero-power device.

5. The method according to any one of claims 1 to 4, wherein transmitting, by the terminal device, the second signal to the network device comprises:
transmitting, by the terminal device, the second signal to the network device in a case where the received first signal satisfies a first condition.

6. The method according to claim 5, wherein the first condition comprises:
energy accumulated based on the first signal reaching a first threshold; and/or
strength of the first signal being greater than or equal to a second threshold.

7. The method according to claim 5 or 6, wherein transmitting, by the terminal device, the second signal to the network device in the case where the received first signal satisfies the first condition comprises:
in the case where the received first signal satisfies the first condition, detecting, by the terminal device, a third signal transmitted by the network device, and transmitting the second signal based on the third signal.

8. The method according to claim 7, wherein the second signal is transmitted by reflection based on the third signal.

9. The method according to any one of claims 1 to 8, wherein the second signal is transmitted by reflection based on the first signal.

10. The method according to any one of claims 1 to 9, further comprising:
receiving, by the terminal device, a periodic boundary signal, wherein the periodic boundary signal is used by the terminal device to determine whether to process the first signal.

11. The method according to claim 10, wherein the periodic boundary signal comprises timing information, and the timing information is used by the terminal device to determine a period for processing the first signal.

12. The method according to any one of claims 1 to 11, wherein the first signal and/or the second signal are obtained through binary sequence modulation based on the first identification information.

13. A positioning method, comprising:
transmitting, by a trigger device, a first signal to a terminal device, wherein the first signal comprises first identification information, the first identification information is related to a reception area of the first signal, and the first identification information is used for determining a position of the terminal device.

14. The method according to claim 13, wherein the trigger device is used to transmit first signals comprising different first identification information in different areas.

15. The method according to claim 13, wherein transmitting, by the trigger device, the first signal to the terminal device comprises:
transmitting, by the trigger device, first signals comprising different first identification information to terminal devices in different areas based on a beamforming manner.

16. The method according to any one of claims 13 to 15, wherein the first identification information is used for indicating at least one of:
location information of the trigger device;
beam information transmitted by the trigger device for transmitting the first signal;
time information of the trigger device transmitting the first signal; or
information of a cell to which the trigger device belongs.

17. The method according to claim 16, wherein the time information comprises information of a time slice in which the first signal is located.

18. The method according to any one of claims 13 to 17, wherein the terminal device comprises a zero-power device, and the first signal is further used to supply power to the zero-power device.

19. The method according to any one of claims 13 to 18, further comprising:
transmitting, by the trigger device, a periodic boundary signal to the terminal device, wherein the periodic boundary signal is used by the terminal device to determine whether to process the first signal.

20. The method according to claim 19, wherein the periodic boundary signal comprises timing information, and the timing information is used by the terminal device to determine a period for processing the first signal.

21. The method according to any one of claims 13 to 20, wherein the first signal is obtained through binary sequence modulation based on the first identification information.

22. The method according to any one of claims 13 to 21, wherein the first signal is used to trigger the terminal device to transmit a second signal to a network device, the second signal comprises the first identification information, and the first identification information is used by the network device to determine a position of the terminal device.

23. The method according to claim 22, wherein the trigger device communicates with the network device through a dedicated link.

24. A positioning method, comprising:
receiving, by a network device, a second signal from a terminal device, wherein the second signal comprises first identification information obtained by the terminal device based on a first signal received by the terminal device, and the first identification information is related to a reception area of the first signal; and
determining, by the network device, a position of the terminal device based on the first identification information.

25. The method according to claim 24, wherein the first identification information is used for indicating at least one of:
location information of a trigger device that transmits the first signal;
beam information transmitted by a trigger device for transmitting the first signal;
time information of a trigger device transmitting the first signal; or
information of a cell to which a trigger device belongs.

26. The method according to claim 25, wherein the time information comprises information of a time slice in which the first signal is located.

27. The method according to any one of claims 24 to 26, wherein the terminal device comprises a zero-power device, and the first signal is a power supply signal for the zero-power device.

28. The method according to any one of claims 24 to 27, further comprising:
transmitting, by the network device, a third signal to the terminal device, wherein the third signal is used to trigger the terminal device to transmit the second signal.

29. The method according to claim 28, wherein the second signal is transmitted by reflection based on the third signal.

30. The method according to any one of claims 24 to 28, wherein the second signal is transmitted by reflection based on the first signal.

31. The method according to any one of claims 24 to 30, further comprising:
transmitting, by the network device, a periodic boundary signal to the terminal device, wherein the periodic boundary signal is used by the terminal device to determine whether to process the first signal.

32. The method according to claim 31, wherein the periodic boundary signal comprises timing information, and the timing information is used by the terminal device to determine a period for processing the first signal.

33. The method according to any one of claims 24 to 32, wherein the first signal and/or the second signal are obtained through binary sequence modulation based on the first identification information.

34. The method according to any one of claims 24 to 33, wherein the first signal is transmitted by a trigger device, and the trigger device communicates with the network device through a dedicated link.

35. A terminal device, comprising:
a first communication unit, configured to receive a first signal transmitted by a trigger device and to transmit a second signal to a network device; wherein the first signal comprises first identification information, the first identification information is related to a reception area of the first signal, the second signal comprises the first identification information, and the first identification information is used by the network device to determine a position of the terminal device.

36. The terminal device according to claim 35, wherein the first identification information is used for indicating at least one of:
location information of the trigger device;
beam information transmitted by the trigger device for transmitting the first signal;
time information of the trigger device transmitting the first signal; or
information of a cell to which the trigger device belongs.

37. The terminal device according to claim 36, wherein the time information comprises information of a time slice in which the first signal is located.

38. The terminal device according to any one of claims 35 to 37, wherein the terminal device comprises a zero-power device, and the first signal is further used to supply power to the zero-power device.

39. The terminal device according to any one of claims 35 to 38, wherein the first communication unit is configured to:
transmit the second signal to the network device in a case where the received first signal satisfies a first condition.

40. The terminal device according to claim 39, wherein the first condition comprises:
energy accumulated based on the first signal reaching a first threshold; and/or
strength of the first signal being greater than or equal to a second threshold.

41. The terminal device according to claim 39 or 40, wherein the first communication unit is configured to:
in the case where the received first signal satisfies the first condition, detect a third signal transmitted by the network device and transmit the second signal based on the third signal.

42. The terminal device according to claim 41, wherein the second signal is transmitted by reflection based on the third signal.

43. The terminal device according to any one of claims 35 to 41, wherein the second signal is transmitted by reflection based on the first signal.

44. The terminal device according to any one of claims 35 to 43, wherein the first communication unit is further configured to:
receive a periodic boundary signal, wherein the periodic boundary signal is used by the terminal device to determine whether to process the first signal.

45. The terminal device according to claim 44, wherein the periodic boundary signal comprises timing information, and the timing information is used by the terminal device to determine a period for processing the first signal.

46. The terminal device according to any one of claims 35 to 45, wherein the first signal and/or the second signal are obtained through binary sequence modulation based on the first identification information.

47. A trigger device, comprising:
a second communication unit, configured to transmit a first signal to a terminal device, wherein the first signal is used for indicating first identification information, the first identification information is related to a reception area of the first signal, and the first identification information is used for determining a position of the terminal device.

48. The trigger device according to claim 47, wherein the trigger device is used to transmit first signals comprising different first identification information in different areas.

49. The trigger device according to claim 47, wherein the second communication unit is configured to:
transmit first signals comprising different first identification information to terminal devices in different areas based on a beamforming manner.

50. The trigger device according to any one of claims 47 to 49, wherein the first identification information is used for indicating at least one of:
location information of the trigger device;
beam information transmitted by the trigger device for transmitting the first signal;
time information of the trigger device transmitting the first signal; or
information of a cell to which the trigger device belongs.

51. The trigger device according to claim 50, wherein the time information comprises information of a time slice in which the first signal is located.

52. The trigger device according to any one of claims 47 to 51, wherein the terminal device comprises a zero-power device, and the first signal is further used to supply power to the zero-power device.

53. The trigger device according to any one of claims 47 to 52, wherein the second communication unit is further configured to:
transmit a periodic boundary signal to the terminal device, wherein the periodic boundary signal is used by the terminal device to determine whether to process the first signal.

54. The trigger device according to claim 53, wherein the periodic boundary signal comprises timing information, and the timing information is used by the terminal device to determine a period for processing the first signal.

55. The trigger device according to any one of claims 47 to 54, wherein the first signal is obtained through binary sequence modulation based on the first identification information.

56. The trigger device according to any one of claims 47 to 55, wherein the first signal is used to trigger the terminal device to transmit a second signal to a network device, the second signal comprises the first identification information, and the first identification information is used by the network device to determine a position of the terminal device.

57. The trigger device according to claim 56, wherein the trigger device communicates with the network device through a dedicated link.

58. A network device, comprising:
a third communication unit, configured to receive a second signal from a terminal device, wherein the second signal comprises first identification information obtained by the terminal device based on a first signal received by the terminal device, and the first identification information is related to a reception area of the first signal; and
a first processing unit, configured to determine a position of the terminal device based on the first identification information.

59. The network device according to claim 58, wherein the first identification information is used for indicating at least one of:
location information of a trigger device that transmits the first signal;
beam information transmitted by a trigger device for transmitting the first signal;
time information of a trigger device transmitting the first signal; or
information of a cell to which a trigger device belongs.

60. The network device according to claim 59, wherein the time information comprises information of a time slice in which the first signal is located.

61. The network device according to any one of claims 58 to 60, wherein the terminal device comprises a zero-power device, and the first signal is a power supply signal for the zero-power device.

62. The network device according to any one of claims 58 to 61, wherein the third communication unit is further configured to:
transmit a third signal to the terminal device, wherein the third signal is used to trigger the terminal device to transmit the second signal.

63. The network device according to claim 62, wherein the second signal is transmitted by reflection based on the third signal.

64. The network device according to any one of claims 58 to 62, wherein the second signal is transmitted by reflection based on the first signal.

65. The network device according to any one of claims 58 to 64, wherein the third communication unit is further configured to:
transmit a periodic boundary signal to the terminal device, wherein the periodic boundary signal is used by the terminal device to determine whether to process the first signal.

66. The network device according to claim 65, wherein the periodic boundary signal comprises timing information, and the timing information is used by the terminal device to determine a period for processing the first signal.

67. The network device according to any one of claims 58 to 66, wherein the first signal and/or the second signal are obtained through binary sequence modulation based on the first identification information.

68. The network device according to any one of claims 58 to 67, wherein the first signal is transmitted by a trigger device, and the trigger device communicates with the network device through a dedicated link.

69. A terminal device, comprising: a transceiver, a processor and a memory, wherein the memory is configured to store a computer program, the transceiver is configured to communicate with other devices, and the processor is configured to invoke and execute the computer program stored in the memory, to cause the terminal device to perform the method according to any one of claims 1 to 12.

70. A trigger device, comprising: a transceiver, a processor and a memory, wherein the memory is configured to store a computer program, the transceiver is configured to communicate with other devices, and the processor is configured to invoke and execute the computer program stored in the memory, to cause the trigger device to perform the method according to any one of claims 13 to 23.

71. A network device, comprising: a transceiver, a processor and a memory, wherein the memory is configured to store a computer program, the transceiver is configured to communicate with other devices, and the processor is configured to invoke and execute the computer program stored in the memory, to cause the network device to perform the method according to any one of claims 24 to 34.

72. A chip, comprising: a processor, configured to invoke a computer program from a memory and execute the computer program, to cause a device equipped with the chip to perform the method according to any one of claims 1 to 12.

73. A chip, comprising: a processor, configured to invoke a computer program from a memory and execute the computer program, to cause a device equipped with the chip to perform the method according to any one of claims 13 to 23.

74. A chip, comprising: a processor, configured to invoke a computer program from a memory and execute the computer program, to cause a device equipped with the chip to perform the method according to any one of claims 24 to 34.

75. A computer-readable storage medium, configured to store a computer program which, when executed by a device, causes the device to perform the method according to any one of claims 1 to 12.

76. A computer-readable storage medium, configured to store a computer program which, when executed by a device, causes the device to perform the method according to any one of claims 13 to 23.

77. A computer-readable storage medium, configured to store a computer program which, when executed by a device, causes the device to perform the method according to any one of claims 24 to 34.

78. A computer program product, comprising: computer program instructions, wherein the computer program instructions cause a computer to perform the method according to any one of claims 1 to 12.

79. A computer program product, comprising: computer program instructions, wherein the computer program instructions cause a computer to perform the method according to any one of claims 13 to 23.

80. A computer program product, comprising: computer program instructions, wherein the computer program instructions cause a computer to perform the method according to any one of claims 24 to 34.

81. A computer program, wherein the computer program causes a computer to perform the method according to any one of claims 1 to 12.

82. A computer program, wherein the computer program causes a computer to perform the method according to any one of claims 13 to 23.

83. A computer program, wherein the computer program causes a computer to perform the method according to any one of claims 24 to 34.

84. A communication system, comprising:
a terminal device, configured to perform the method according to any one of claims 1 to 12;
a trigger device, configured to perform the method according to any one of claims 13 to 23; and
a network device, configured to perform the method according to any one of claims 24 to 34.
